# EUROPÄISCHE PATENTANMELDUNG

(11) **EP 3 679 844 A1**
(43) Veröffentlichungstag der Anmeldung: **15.07.2020**
(21) Anmeldenummer: 19151630.1
(22) Anmeldetag: 14.01.2019
(51) Int. Cl.: A47K 13/26, F16B 13/06

(54) **BEFESTIGUNGSVORRICHTUNG FÜR EINEN TOILETTENSITZ**

(71) Anmelder: PlumTech GmbH, 8645 Rapperswil-Jona (CH)
(72) Erfinder: XU, Jinzhou, 8340 Hinwil (CH); Dr. ANGERMANN, André, 8634 Hombrechtikon (CH)
(74) Vertreter: Troesch Scheidegger Werner AG

(57) **Zusammenfassung**

Eine Befestigungsvorrichtung für einen Toilettensitz, umfassend
eine Spannvorrichtung (1;2) mit einem ersten Spannelement (1) und mit einem zweiten Spannelement (2), welche sich entlang einer Längsachse (L) erstrecken,
eine Spreizhülse (3) und einen Spreizkörper (4), welche sich entlang der Längsachse (L) erstrecken und welche zwischen den beiden Spannelementen (1;2) angeordnet sind,
eine Abdeckscheibe (5), welche sich im Wesentlichen senkrecht zur Längsachse (L) erstreckt und welche zwischen dem zweiten Spannelement (2) dem Spreizkörper (4) angeordnet ist,
wobei ein Verspannen der Spannelemente (1;2) zu einer Spreizung der Spreizhülse (3) mittels des Spreizkörpers (4) führt und zu einer Klemmkraft zwischen der Spreizhülse (3) und der Abdeckscheibe (5) führt.

## Beschreibung

### TECHNISCHES GEBIET

Die vorliegende Erfindung betrifft eine Befestigungsvorrichtung zur Montage in einer Ausnehmung, insbesondere eine Befestigungsvorrichtung für einen Toilettensitz in einer Ausnehmung eines Toilettenkörpers.

### STAND DER TECHNIK

Aus dem Stand der Technik sind Toilettensitz-Befestigungen bekannt, welche beschränkt verschiebbar in einer Ausnehmung eines Toilettenkörpers montierbar sind. Beispielsweise offenbart die DE 10 2015 120 525 ein Befestigungssystem für einen Toilettensitz mit einem Käfig, der mit dem Toilettenbecken verbindbar ist, und eine Käfigmutter, die in dem Käfig aufgenommen ist und ein Gewinde umfasst, in das ein Befestigungsmittel für den Toilettensitz eingeschraubt ist.

Solche Systeme haben den Nachteil, dass sie nur als Gesamtsystem eingesetzt werden können, d.h. der Käfig ist mit einer Schraube mit Spezialkopf am Toilettenbecken befestigt. Da die Käfigmutter vor der Montage in den Käfig einzusetzen ist, sind diese nach der Montage des Toilettenbeckens, beispielsweise an einer Wandbefestigung, nicht mehr entfernbar.

Dementsprechend können dann nur Toilettensitze verwendet werden, die Befestigungsmittel umfassen, welche in die Käfigmutter einschraubbar sind.

### BESCHREIBUNG DER ERFINDUNG

Eine Aufgabe der vorliegenden Erfindung besteht darin, eine Befestigungsvorrichtung für einen Toilettensitz bereitzustellen, welcher zusammen mit jeder Art von Toilettenbefestigung verwendbar ist.

Diese Aufgabe wird durch eine Befestigungsvorrichtung mit den Merkmalen des Anspruchs 1 gelöst. Weitere Ausführungsformen der Befestigungsvorrichtung sind durch die Merkmale von weiteren Ansprüchen definiert.

Eine erfindungsgemässe Befestigungsvorrichtung für einen Toilettensitz umfasst eine Spannvorrichtung mit einem ersten Spannelement und mit einem zweiten Spannelement, welche entlang einer Längsachse gegeneinander verspannbar sind. Sie umfasst weiter eine Spreizhülse, welche sich von einem ersten Ende entlang der Längsachse zu einem zweiten Ende erstreckt. Weiter umfasst sie einen Spreizkörper, welcher sich von einem ersten Ende entlang der Längsachse zu einem zweiten Ende erstreckt, wobei die äusseren Abmessungen des ersten Endes des Spreizkörpers und die inneren Abmessungen des zweiten Endes der Spreizhülse derart ausgestaltet sind, dass das erste Ende des Spreizkörpers in das zweite Ende der Spreizhülse einführbar ist, wobei zwischen dem ersten Ende des Spreizkörpers und dem zweiten Ende des Spreizkörpers mindestens ein konischer Abschnitt vorgesehen ist, in welchem die äusseren Abmessungen in der Richtung des zweiten Endes des Spreizkörpers zunehmen, wobei die grössten äusseren Abmessungen des konischen Abschnitts grösser sind als die inneren Abmessungen des zweiten Endes der Spreizhülse. Weiter umfasst die erfindungsgemässe Befestigungsvorrichtung eine Abdeckscheibe, welche sich im Wesentlichen senkrecht zur Längsachse erstreckt, wobei die äusseren Abmessungen der Abdeckscheibe grösser sind als die grössten äusseren Abmessungen des konischen Abschnitts des Spreizkörpers. Die Spreizhülse, der Spreizkörper und die Abdeckscheibe sind zwischen dem ersten Spannelement und dem zweiten Spannelement angeordnet, wobei die Spreizhülse mit ihrem ersten Ende am ersten Spannelement anschlägt. Der Spreizkörper ist mit seinem ersten Ende auf der Seite des zweiten Endes der Spreizhülse einführbar an der Spreizhülse angeordnet. Die Abdeckscheibe schlägt mit ihrer einen Seite am zweiten Ende des Spreizkörpers an und schlägt mit ihrer anderen Seite am zweiten Spannelement an. Ein Einführen des Spreizkörpers in die Spreizhülse kann aufgrund des konischen Abschnitts des Spreizkörpers zu einer Vergrösserung der Abmessungen des zweiten Endes der Spreizhülse über den grössten äusseren Abmessungen des konischen Abschnitts hinaus bewirken. Durch ein Verspannen der beiden Spannelemente, zwischen dem zweiten Ende der Spreizhülse und der Abdeckscheibe eine Klemmkraft erzeugbar ist.

Ein solches Befestigungssystem hat den Vorteil, dass es zusammen mit jeder Art von Toilettenbefestigung verwendet werden kann, beispielsweise zusammen mit wandhängenden oder bodenstehenden Toiletten-Becken. Das Befestigungssystem ist in unterschiedlichsten Ausnehmungen in einem Toilettenkörper eines Toiletten-Beckens einsetzbar, insbesondere in Ausnehmungen, welche einen Hinterschnitt umfassen. Beispielsweise kann ein solches Befestigungssystem in einen vorhandenen Käfig eingesetzt werden, der einen Hinterschnitt umfasst oder das Befestigungssystem kann zumindest mit der Spreizhülse durch eine Ausnehmung in einem Toilettenkörper hindurchgeführt werden, wobei der Toilettenkörper selber den Hinterschnitt umfasst. Für das Befestigen der Vorrichtung ist es notwendig, dass die Spreizhülse durch den Spreizkörper gespreizt wird. Dafür muss der Spreizkörper in die Spreizhülse eingeführt werden können. Dies ist möglich, wenn beispielsweise die äusseren Abmessungen des ersten Endes des Spreizkörpers kleiner sind als die inneren Abmessungen des zweiten Endes der Spreizhülse, sie können aber auch gleichgross sein. Die äusseren Abmessungen des ersten Endes des Spreizkörpers können etwas grösser sein als die inneren Abmessungen des zweiten Endes der Spreizhülse. In diesem Fall ist jedoch ein Kraftaufwand nötig, um den Spreizkörper in die Spreizhülse einzuführen. Am Umfang des zweiten Endes der Spreizhülse kann auch ein zumindest teilweise umlaufender Wulst vorgesehen sein, wodurch der Kraftaufwand nur über eine kurze Strecke beim Einführen aufzubringen ist. Die Spreizhülse, sowie der Spreizkörper können einteilig oder mehrteilig ausgestaltet sein. Beispielsweise können sie mehrere Segmente umfassen. Die Spreizhülse kann mehrere steife Segmente umfassen, welche durch ein elastisches Element zusammengedrückt werden, beispielsweise durch einen Gummi. Beispielsweise sind das erste Spannelement, das zweite Spannelement und die Abdeckscheibe aus Metall gefertigt. Sie können jedoch auch zumindest teilweise aus Kunststoff gefertigt sein. Die Spreizhülse und der Spreizkörper sind beispielsweise aus Kunststoff gefertigt. Sie können jedoch auch zumindest teilweise aus Metall gefertigt sein.

In einer Ausführungsform umfasst der Schaft des ersten Spannelements einen kreisförmigen Querschnitt, und/oder der Anschlag ist eine Scheibe und umfasst einen kreisförmigen Querschnitt. Alternativ oder zusätzlich umfasst die Spreizhülse kreisförmige Querschnitte. Alternativ oder zusätzlich umfasst der Spreizkörper kreisförmige Querschnitte. Die kreisförmigen Querschnitte sind vorteilhaft, da herkömmliche Toilettenkörper meist Ausnehmungen mit kreisförmigen Querschnitten umfassen. Mehreckige Querschnitte sind jedoch auch denkbar, beispielsweise vier-, fünf- oder sechseckige. Die Scheibe kann auf ihrer gegen die Spreizhülse gerichteten Seite, an ihrer Peripherie einen im Wesentlichen geschlossen umlaufenden Kragen umfassen, wobei die Innenabmessungen des Kragens grösser sind als die Aussenabmessungen der Spreizhülse. Die Aussenabmessungen der Befestigungsvorrichtung sind so zu bemessen, dass sie etwas kleiner sind als diejenigen der Aussparungen, in die sie eingeführt werden sollen. Ein Untermass von 1 bis 5 Millimeter, bzw. 2 bis 4 Millimeter ist ausreichend. Da die Aussparungen üblicherweise einen Durchmesser von 15 Millimeter ± 3 Millimeter aufweisen, können die Aussendurchmesser der Anschlagscheibe des ersten Spannelements, der Spreizhülse und des Spreizkörpers 7 bis 17 Millimeter, bzw. 10 bis 14 Millimeter betragen.

In einer Ausführungsform umfasst der Schaft an seinem zweiten Ende ein Aussengewinde, und das zweite Spannelement umfasst an seinem gegen das erste Spannelement gerichteten ersten Ende eine Gewindebohrung, welche sich entlang der Längsachse erstreckt. Durch das Verschrauben der beiden Spannelemente können diese miteinander verspannt werden, d.h. der Abstand zwischen dem ersten Ende des ersten Spannelements und dem zweiten Ende des zweiten Spannelements wird verkürzt.

In einer Ausführungsform ist zweite Spannelement gelenkig am zweiten Ende des Schaftes angeordnet, wobei das zweite Spannelement eine Gleitfläche umfasst, welche in Kontakt mit der Abdeckscheibe steht und welche bewirken kann, dass die beiden Spannelemente gegeneinander verspannt werden können, wenn das zweite Spannelement von einer im Wesentlichen zur Längsachse senkrechten Ausrichtung in eine mit der Längsachse fluchtenden Richtung gebracht wird.

In einer Ausführungsform umfasst das zweite Spannelement einen Schaft, welcher sich entlang der Längsachse erstreckt und wobei seitlich am Schaft mindestens zwei sich am Umfang gegenüberliegende Schlüsselflächen ausgebildet sind. An diesen Schlüsselflächen kann ein Werkzeugschlüssel angesetzt werden, um das Verschrauben der beiden Spannelemente zu erleichtern.

In einer Ausführungsform umfasst die Spreizhülse einen Körper mit ersten Schlitzen, welche sich zumindest von einem Bereich des zweiten Endes der Spreizhülse entlang der Längsachse über zumindest einen Bereich der Länge der Spreizhülse erstrecken. Die Schlitze können sich vom zweiten Ende der Spreizhülse aus erstrecken oder sie können beabstandet zum zweiten Ende der Spreizhülse im Hülsenkörper ausgebildet sein. Die Schlitze können sich auch vollständig entlang der gesamten Hülsenlänge erstrecken. Die ersten Schlitze erleichtern das Aufweiten der Spreizhülse zumindest im Bereich ihres zweiten Endes. Und verringern das Risiko der permanenten Verformung der Spreizhülse.

In einer Ausführungsform umfasst die Spreizhülse einen Körper mit zweiten Schlitzen, welche sich zumindest von einem Bereich des ersten Endes der Spreizhülse entlang der Längsachse über zumindest einen Bereich der Länge der Spreizhülse erstrecken. Die Schlitze können sich vom ersten Ende der Spreizhülse aus erstrecken oder sie können beabstandet zum ersten Ende der Spreizhülse im Hülsenköper ausgebildet sein. Die zweiten Schlitze erleichtern die Verformung der Spreizhülse zumindest im Bereich ihres ersten Endes. Beispielsweise erlauben die zweiten Schlitze die Verkleinerung der äusseren Abmessungen des ersten Endes der Spreizhülse, wenn das zweite Ende aufgeweitet wird. Dadurch verringert sich das Risiko der permanenten Verformung der Spreizhülse.

In einer Ausführungsform sind die äusseren Abmessungen des ersten Endes der Spreizhülse grösser als die äusseren Abmessungen des zweiten Endes der Spreizhülse. Durch das konische zusammenlaufen der Spreizhülse in der Richtung des zweiten Spannelements, kann die Spreizhülse einfacher und zuverlässiger aus der Ausnehmung im Käfig oder aus der Ausnehmung im Toilettenkörper entfernt werden.

In einer Ausführungsform nimmt die Breite der ersten Schlitze der Spreizhülse vom Bereich des zweiten Endes der Spreizhülse in der Richtung des ersten Endes der Spreizhülse ab. Dadurch verringert sich die Breite der im Hülsenkörper verbleibenden Stege vom ersten Ende zum zweiten Ende der Spreizhülse hin. Demnach verringert sich die Steifigkeit der Spreizhülse in der Richtung ihres zweiten Endes.

In einer Ausführungsform umfasst der Körper der Spreizhülse ein erstes Material und wobei zumindest ein Bereich der ersten Schlitze und/oder zumindest ein Bereich der zweiten Schlitze mit einem zweiten Material gefüllt sind. Es sind zwei- oder mehr Komponenten denkbar, welche miteinander verbunden sind. Beispielsweise kann die Spreizhülse mit einem Zweikomponenten-Spritzgussverfahren hergestellt werden. Das erste Material kann zumindest teilweise steif sein und das zweite Material kann zumindest teilweise elastisch sein. Die elastische Verformung findet daher nahezu vollständig im elastischen Material statt, wodurch eine permanente Verformung des ersten Materials vermieden werden kann.

In einer Ausführungsform umfasst der Körper des Bereiches des zweiten Endes der Spreizhülse ein Material, welches unterschiedlich zum Material der restlichen Bereiche des Körpers der Spreizhülse ist. Durch diese Ausgestaltung ist das ganze zweite Ende der Spreizhülse sehr elastisch, wodurch eine permanente plastische Verformung des zweiten Endes der Spreizhülse nahezu verhinderbar ist.

In einer Ausführungsform umfasst das Material des Bereiches des zweiten Endes der Spreizhülse das zweite Material. Alternativ kann ein drittes elastisches Material verwendet werden.

In einer Ausführungsform umfasst der Spreizkörper eine Durchgangsbohrung, welche sich entlang der Längsachse über die gesamte Länge des Spreizkörpers erstreckt. Der Durchmesser der Durchgangsbohrung ist derart bemessen, dass der Schaft des ersten Spannelements mit genügend Spiel darin bewegbar ist.

In einer Ausführungsform umfasst der Spreizkörper einen ersten zylindrischen Abschnitt, gefolgt von einem zweiten konischen Abschnitt, gefolgt von einem weiteren zylindrischen Abschnitt.

Ganz allgemein gilt, dass die Zunahme der äusseren Abmessungen des Spreizkörpers, d.h. die Zunahme dessen Aussendurchmessers stetig oder stufenförmig erfolgt. Die Zunahme des Durchmessers kann kontinuierlich, zunehmend oder abnehmend sein.

In einer Ausführungsform umfasst der Spreizkörper mehrere Abschnitte, wobei jeder der Abschnitte ein dem ersten Ende des Spreizkörpers zugewandtes drittes Ende umfasst, und wobei die äussern Abmessungen des Spreizkörpers vom dritten Ende in der Richtung des zweiten Endes des Spreizkörpers zunehmen, und wobei die äusseren Abmessungen des dritten Endes im Wesentlichen denjenigen des ersten Endes des Spreizkörpers entsprechen. Am dritten Ende jedes Abschnitts ist somit eine Einkerbung ausgebildet. Die Einkerbungen können als Soll-Bruchstellen dienen, und erleichtern die Einstellung der Länge des Spreizkörpers.

In einer Ausführungsform sind die mehreren Abschnitte des Spreizkörpers entlang der Längsachse unterschiedlich lang. Alternativ können sie gleichlang sein. Die längsten Abschnitte können derart ausgebildet sein, dass sie gerade noch in den Hinterschnitt eines Käfigs einführbar sind. Es können nun mehrere solche Abschnitte aneinandergereiht sein und es können anschliessend kürzere Abschnitte angeordnet sein. Dies erleichtert die Anpassung der Länge des Spreizkörpers an den vorgegebenen Käfig, bzw. den vorgegebenen Toilettenkörper.

In einer Ausführungsform umfasst die Abdeckscheibe eine Ausnehmung, welche sich entlang der Längsachse durch die Abdeckscheibe hindurch erstreckt und die Abdeckscheibe ist mit der Ausnehmung um den Schaft des ersten Spannelements angeordnet. Die Ausnehmung kann eine Durchgangsbohrung sein, deren Durchmesser genug gross ist, um den Schaft des ersten Spannelements mit genügend Spiel darin aufnehmen zu können.

In einer Ausführungsform ist die Abdeckscheibe im Wesentlichen plan oder gewölbt ausgebildet. Plane oder gewölbte Abdeckscheiben können einen im Wesentlichen geschlossen umlaufenden Rand, bzw. eine geschlossen umlaufende Krempe umfassen.

In einer Ausführungsform ist die Abdeckscheibe als Exzenter ausgebildet. Die Ausnehmung ist als T-Nut ausgebildet, welche sich im Wesentlichen von der zentrisch angeordneten Längsachse (L) senkrecht zu dieser seitlich nach aussen erstreckt. Das zweite Spannelement ist als Mutter ausgebildet und der Exzenter umfasst einen Stift, welcher seitlich neben der Ausnehmung angeordnet ist und sich parallel zur Längsachse vom Scheibenkörper weg erstreckt. Durch ein Verschieben der Mutter in der T-Nut kann der Abstand des Stiftes zur Längsachse eingestellt werden. Bei zwei nebeneinander angeordneten Befestigungsvorrichtungen, wie dies bei der Befestigung von Toilettensitzen üblich ist, kann durch eine Drehung eines und/oder beider Exzenter der Abstand zwischen den beiden Stiften eingestellt werden.

In einer Ausführungsform sind das zweite Spannelement, der Spreizkörper und die Abdeckscheibe gemeinsam einstückig ausgebildet.

In einer Ausführungsform umfasst der Schaft des ersten Spannelements eine geschlossen umlaufende Nut und der Spreizkörper umfasst ein Rastelement, welches in dessen Durchgangsbohrung ragt, wobei das Rastelement bei einer teilweisen Aufschiebung des Spreizkörpers auf den Schaft des ersten Spannelements in die Nut eingreifen kann. Dies erlaubt eine Vormontage des Spreizkörpers in der Spreizhülse und stellt sicher, dass das Gewinde des zweiten Spannelements bleibend über den Spreizkörper hinausragt. Das zweite Spannelement lässt sich so viel einfacher aufschrauben. Das Rastelement kann eine einstückig mit dem Spreizkörper ausgebildete Erhöhung, wie beispielsweise ein geschlossen umlaufender Wulst sein oder es kann ein im Spreizkörper beweglich angeordnetes Element, wie beispielsweise eine Kugel- oder Stiftraste sein. Es können auch mehrere entlang der Längsachse angeordnete Elemente vorgesehen sein; beispielsweise zwei parallele Wülste. Alternativ kann am Schaft mindestens ein geschlossen umlaufender Wulst vorgesehen sein und im Spreizkörper kann in der Durchgangsbohrung mindestens eine geschlossen umlaufende Nut vorgesehen sein. Die Durchgangsbohrung des Spreizkörpers kann mindestens einen Absatz umfassen, welcher sich vom ersten Ende des Spreizkörpers aus erstreckt. Ganz allgemein können am ersten Spannelement und am Spreizkörper Rastelemente vorgesehen sein, welche lösbar miteinander verrastbar sind und mit welchen verhindert wird, dass die benötigte Kraft beim Aufschieben des Spreizkörpers auf den Schaft des ersten Spannelements zu gross ist.

Die erwähnten Ausführungsformen der Befestigungsvorrichtung lassen sich in beliebiger Kombination einsetzen, sofern sie sich nicht widersprechen.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
Fig. 1 eine geschnittene Explosionsansicht einer ersten Ausführungsform einer erfindungsgemässen Befestigungsvorrichtung;
Fig. 2 eine Schnittansicht der Befestigungsvorrichtung der Figur 1 im eingebauten Zustand;
Fig. 3 eine Schnittansicht einer zweiten Ausführungsform einer erfindungsgemässen Befestigungsvorrichtung im eingebauten Zustand;
Fig. 4 eine Schnittansicht einer weiteren Ausführungsform eines erfindungsgemässen Spreizkörpers;
Fig. 5 eine Schnittansicht einer einstückigen Kombination von Elementen einer erfindungsgemässen Befestigungsvorrichtung;
Fig. 6 einen Exzenter als Abdeckscheibe mit einer Mutter als zweites Spannelement für eine erfindungsgemässe Befestigungsvorrichtung;
Fig. 7 eine Schnittansicht des Exzenters der Figur 6 im eingebauten Zustand;
Fig. 8a-d perspektivische Ansichten erfindungsgemässer Spreizhülsen;
Fig. 9 eine weitere Ausführungsform einer erfindungsgemässen Spannvorrichtung; und
Fig. 10 eine Schnittansicht einer weiteren Ausführungsform einer erfindungsgemässen Befestigungsvorrichtung im teilweise eingebauten Zustand.

### DETAILLIERTE BESCHREIBUNG DER ERFINDUNG

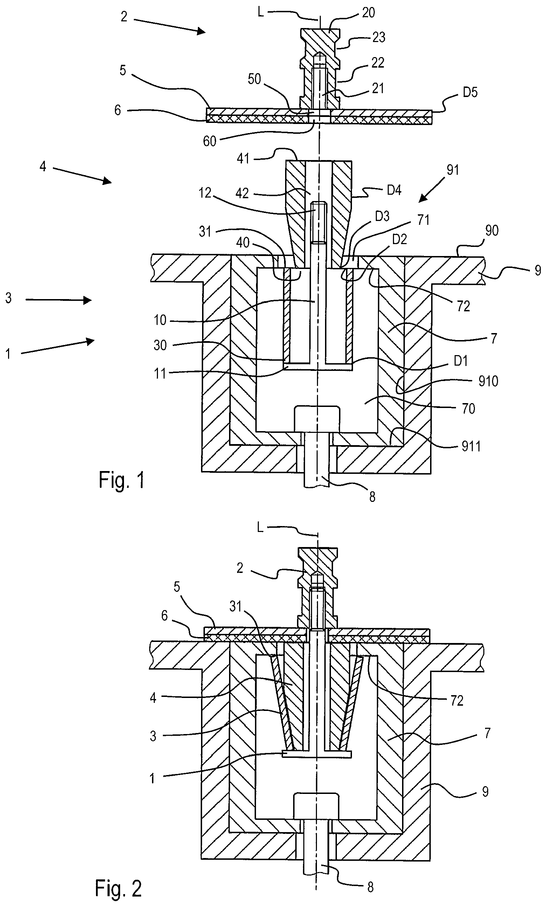

Die Figur 1 zeigt eine geschnittene Explosionsansicht einer ersten Ausführungsform einer erfindungsgemässen Befestigungsvorrichtung und die Figur 2 zeigt eine Schnittansicht der Befestigungsvorrichtung der Figur 1 im eingebauten Zustand. Die Befestigungsvorrichtung umfasst eine Spannvorrichtung 1;2 mit einem ersten Spannelement 1 und mit einem zweiten Spannelement 2. Das erste Spannelement 1 umfasst einen Schaft 10, welcher sich entlang der Längsachse L erstreckt, an dessen erstem Ende eine Anschlagscheibe 11 vorgesehen ist und an dessen zweitem Ende ein Gewinde 12 vorgesehen ist. Das zweite Spannelement umfasst einen Schaft 20, welcher sich entlang der Längsachse L erstreckt, an dessen erstem Ende eine Gewindebohrung 21 vorgesehen ist. In einem an das erste Ende anschliessenden Bereich des Schaftes 20 sind am Umfang zwei sich gegenüberliegende Schlüsselflächen 22 angeordnet. In einem Bereich des zweiten Endes des Schaftes 20, bzw. des zweiten Spannelements 2 ist eine am Umfang geschlossen umlaufende Nut 23 vorgesehen. Um den Schaft 10 des ersten Spannelements 1 ist eine Spreizhülse 3 angeordnet. Die Spreizhülse 3 erstreckt sich entlang der Längsachse L und schlägt mit ihrem ersten Ende 30 an der Anschlagscheibe 11 des ersten Spannelements 1 an. Der Aussendurchmesser D1 des ersten Endes 30 der Spreizhülse ist gleichgross wie der Aussendurchmesser der Anschlagscheibe 11. Das zweite Ende des Schaftes 10 des ersten Spannelements 1 ragt über ein zweites Ende 31 der Spreizhülse 3. Der Aussendurchmesser des zweiten Endes 31 der Spreizhülse 3 ist gleichgross wie der Aussendurchmesser D1 des ersten Endes 30. Ein Spreizkörper 4 kann zwischen dem Schaft 10 des ersten Spannelements 1 und der Spreizhülse 3 eingeführt werden. Der Spreizkörper 4 erstreckt sich entlang der Längsachse L, umfasst ein erstes Ende 40, ein zweites Ende 41 und eine Durchgangsbohrung 42, welche sich entlang der Längsachse L vollständig durch den Spreizkörper 4 erstreckt. Der Aussendurchmesser D3 des ersten Endes 40 des Spreizkörpers 4 ist kleiner als der Innendurchmesser D2 des zweiten Endes 31 der Spreizhülse 3. Vom ersten Ende 40 des Spreizkörpers 4 nimmt der Aussendurchmesser in der Richtung des zweiten Endes 41 des Spreizkörpers 4 kontinuierlich bis zu einem maximalen Aussendurchmesser D4 zu. Der maximale Aussendurchmesser D4 des Spreizkörpers 4 ist grösser als der Innendurchmesser D2 des zweiten Endes 31 der Spreizhülse 3. Anschliessend an den konischen Bereich des Spreizkörpers 4 schliesst ein Bereich mit gleichbleibendem Aussendurchmesser an, welcher sich bis zum zweiten Ende 41 des Spreizkörpers 4 erstreckt. Zwischen dem Spreizkörper 4 und dem zweiten Spannelement 2 ist eine Abdeckscheibe 5 angeordnet. Die Abdeckscheibe 5 erstreckt sich senkrecht zur Längsachse L und umfasst eine zentrische Durchgangsbohrung 50, welche sich entlang der Längsachse L erstreckt. Der Aussendurchmesser D5 der Abdeckscheibe 5 ist grösser als der maximale Durchmesser D4 des Spreizkörpers 4. Die Abdeckscheibe 5 kann um den Schaft 10 des ersten Spannelements 1 angeordnet werden, wenn der Spreizkörper 4 zumindest teilweise in die Spreizhülse 3 eingeführt ist. Anschliessend kann das zweite Spannelement 2 auf das erste Spannelement 1 aufgeschraubt werden und die beiden Spannelemente 1;2 können miteinander verspannt werden. Sobald der konische Bereich des Spreizkörpers 4 über das zweite Ende 31 der Spreizhülse 3 hineingeschoben ist, ragt das zweite Ende 31 der Spreizhülse 3 über den maximalen Durchmesser D4 des Spreizkörpers 4. In der dargestellten Ausführungsform ist zwischen dem Spreizkörper 4 und der Abdeckscheibe 5 eine Dichtscheibe 6 angeordnet. Die Dichtscheibe 6 erstreckt sich senkrecht zur Längsachse L und umfasst eine zentrische Durchgangsbohrung 60, welche sich entlang der Längsachse L erstreckt. Der Aussendurchmesser der Dichtscheibe ist gleichgross wie der Aussendurchmesser D5 der Abdeckscheibe 5. Der Durchmesser der Durchgangsbohrung 60 der Dichtscheibe ist kleiner als der Aussendurchmesser des zweiten Endes 41 des Spreizkörpers. Der Durchmesser der Durchgangsbohrung 60 kann aber auch grösser sein als der der Aussendurchmesser des zweiten Endes 41 des Spreizkörpers. Der Aussendurchmesser der Dichtscheibe 6 kann auch kleiner sein als der Aussendurchmesser D5 der Abdeckscheibe 5.

In der in den Figuren 1 und 2 dargestellten Anordnung wird die Befestigungsvorrichtung in einen Käfig 7 eingesetzt, welcher in einer Ausnehmung 91 eines Toilettenkörpers 9 angeordnet ist. Üblicherweise erstreckt sich die Ausnehmung 91 von einer im Wesentlichen horizontalen Oberfläche 90 des Toilettenkörpers 9 im Wesentlichen senkrecht nach unten. Die Ausnehmung 91 umfasst eine seitliche zylindrische Wand 910 und einen kreisförmigen Boden 911. Der Käfig 7 ist mit einer Befestigungsschraube 8 fest mit dem Toilettenkörper 9 verbunden. Die Befestigungsschraube 8 wird gleichzeitig zur Befestigung des Toilettenkörpers 9 an einer Wandbefestigung verwendet. Der Käfig 7 umfasst einen Innenraum 70, der durch eine Öffnung 71 mit der Umgebung verbunden ist. Die Öffnung 71 ist in einer zur Oberfläche 90 des Toilettenkörpers 9 parallelen Ebene im Käfig 7 ausgebildet. Da der Durchmesser der Öffnung 71 kleiner als der Innenraum 70 ist, wird im Bereich um die Öffnung 71 ein Hinterschnitt gebildet, welcher als Anschlag 72 für die Spreizhülse 3 dienen kann. Im zusammengebauten Zustand ist der Anschlag 72 des Käfigs 7 zwischen dem zweiten Ende 31 der Klemmhülse 3 und der Abdeckscheibe 5, bzw. der Dichtscheibe 6 geklemmt. Die Aussendurchmesser D5 der Abdeckscheibe 5 und der Dichtscheibe 6 sind grösser als die seitlichen Abmessungen der Ausnehmung 91 im Toilettenkörper 9, d.h. sie ragen seitlich über die Wand 910 der Ausnehmung.

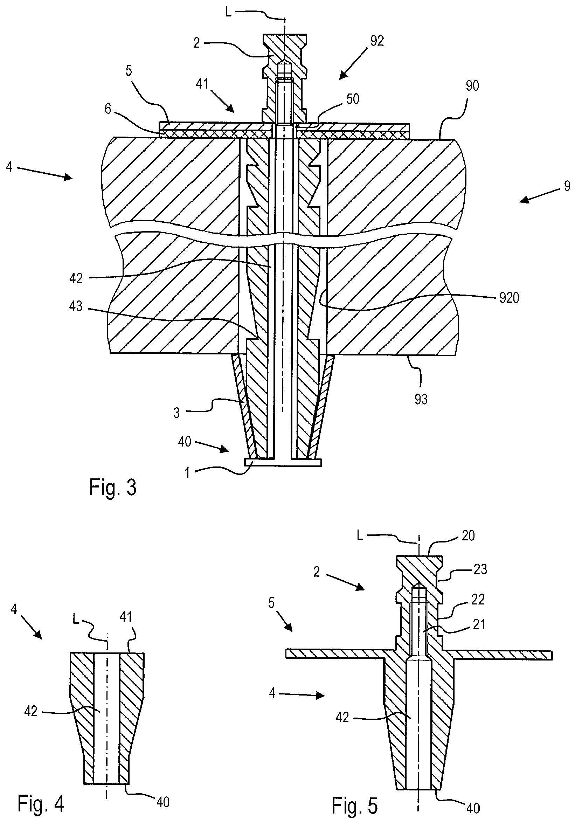

Die Figur 3 zeigt eine Schnittansicht einer zweiten Ausführungsform einer erfindungsgemässen Befestigungsvorrichtung im eingebauten Zustand. In dieser Ausführungsform umfasst der Toilettenkörper 9 eine zweite Ausnehmung 92 in der Form einer Durchgangsbohrung. Die Durchgangsbohrung 92 umfasst eine zylinderförmige Seitenwand 920, welche sich zwischen einer Oberfläche 90 und einer Unterfläche 93 des Toilettenkörpers 9 erstreckt. In dieser Ausführungsform umfasst das Befestigungssystem eine Spreizkörper 4 mit mehreren Segmenten. Dargestellt sind zwei lange Segmente, ein mittellanges Segment und ein kurzes Segment. Die einzelnen Segmente umfassen einen konischen Bereich und einen zylindrischen Bereich mit konstantem Querschnitt. Durch das Aneinanderreihen von konischen Abschnitten an zylindrische Abschnitte entstehen Absätze, welche dritte Enden 43 bilden. An den Absätzen sind die einzelnen Segmente leicht voneinander zu trennen, wodurch die Länge des Spreizkörpers einfach einstellbar ist.

Die Figur 4 zeigt eine Schnittansicht einer weiteren Ausführungsform eines erfindungsgemässen Spreizkörpers 4. Der Spreizkörper 4 erstreckt sich entlang der Längsachse L, umfasst einen ersten zylindrischen Abschnitt, einen an diesen anschliessenden konischen Abschnitt und einen an diesen anschliessenden zylindrischen Abschnitt. Eine Durchgangsbohrung 42 erstreckt sich entlang der Längsachse L durch den Spreizkörper 4.

Die Figur 5 zeigt eine Schnittansicht einer einstückigen Kombination von Elementen einer erfindungsgemässen Befestigungsvorrichtung. Das zweite Spannelement 2, die Abdeckscheibe 5 und der Spreizkörper 5 sind dabei gemeinsam einstückig ausgebildet.

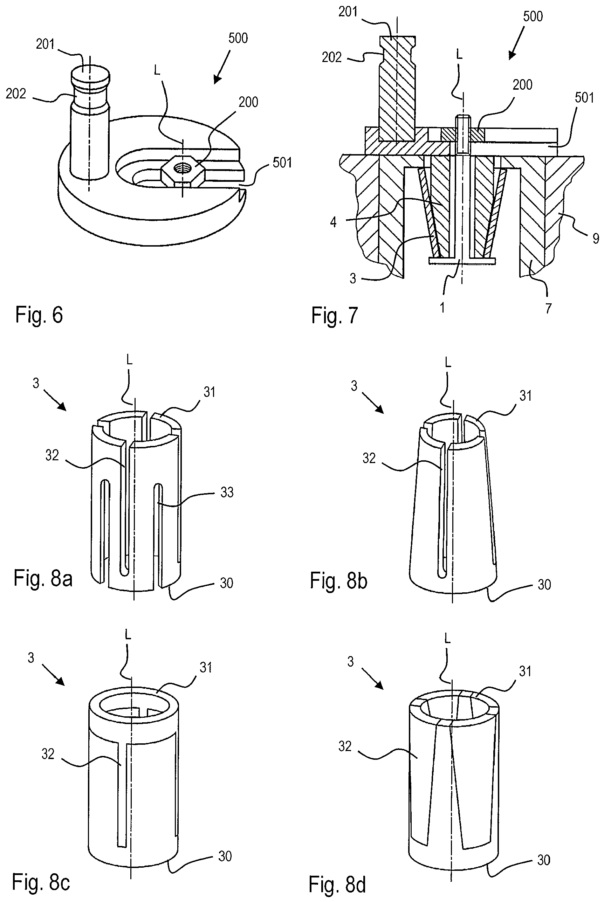

Die Figur 6 zeigt einen Exzenter 500 als Abdeckscheibe mit einer Mutter 200 als zweites Spannelement für eine erfindungsgemässe Befestigungsvorrichtung und die Figur 7 zeigt eine Schnittansicht des Exzenters 500 der Figur 6 im eingebauten Zustand. Der Exzenter 500 umfasst eine zylindrische Scheibe, in welcher sich eine T-Nute 501 im Wesentlichen von der Scheibenmitte radial nach aussen erstreckt. Neben der T-Nut 501 ist ein Stift 201 mit einer Nut 202 angeordnet, wobei sich der Stift 201 im Wesentlichen parallel zur Längsachse L von der Scheibe weg nach oben erstreckt.

Die Figuren 8a bis 8d zeigen perspektivische Ansichten erfindungsgemässer Spreizhülsen. Die Figur 8a Zeigt eine Spreizhülse 3, welche sich entlang einer Längsachse L von einem ersten Ende 30 zu einem zweiten Ende 31 erstreckt, Im Hülsenkörper sind erste Längsschlitzen 32 ausgebildet, welche sich vom zweiten Ende 31 über einen Bereich der Länge des Hülsenkörpers in der Richtung des ersten Endes 30 erstrecken. Im Hülsenkörper sind zweite Längsschlitzen 33 ausgebildet, welche sich vom ersten Ende 30 über einen Bereich der Länge des Hülsenkörpers in der Richtung des zweiten Endes 31 erstrecken.

Die Figur 8b zeigt eine konische Spreizhülse 3, bei welcher der Durchmesser des Hülsenkörpers vom ersten Ende 30 in der Richtung des zweiten Endes 31 konisch abnimmt.

Die Figur 8c zeigt eine Spreizhülse 3 deren Hülsenkörper ein erstes Material umfasst und deren zweites Ende 31 und deren erste Schlitze 32 ein zum ersten Material unterschiedliches zweites Material umfassen.

Die Figur 8d zeigt eine Spreizhülse 3 mit ersten Schlitzen 32, deren Breite von zweiten Ende 31 der Hülse 3 in der Richtung des ersten Endes 30 der Hülse 3 abnimmt. Die Schlitze 32 umfassen wieder ein unterschiedliches Material, d.h. sie sind mit einem anderen Material gefüllt.

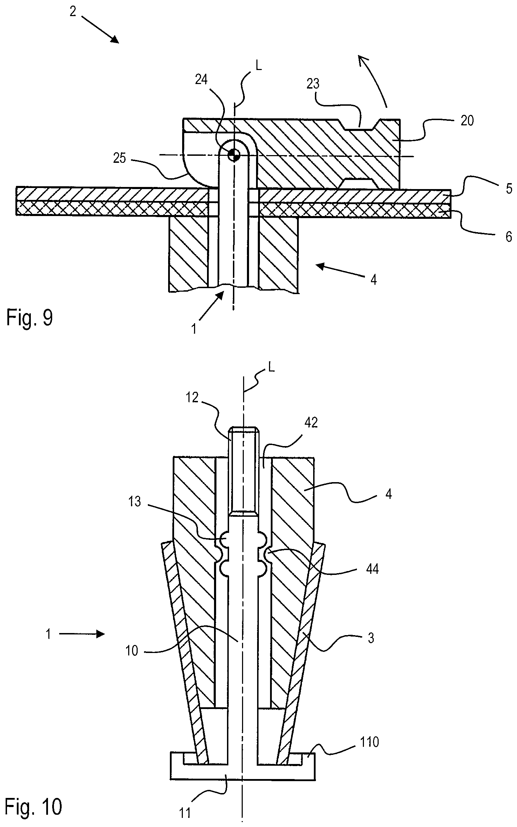

Die Figur 9 zeigt eine weitere Ausführungsform einer erfindungsgemässen Spannvorrichtung. Der Schaft 10 des ersten Spannelements 1 ist durch einen Bolzen 24 gelenkig mit dem Schaft 20 des zweiten Spannelements 2 verbunden. Am Schaft 20 des zweiten Spannelements 2 ist eine Gleitfläche 25 ausgebildet, welche eine zur Mantelfläche des Schaftes 20 tangentiale Fläche in eine zur Längsachse des Schaftes 20 senkrechte Fläche überführt, wobei der Abstand vom Bolzen 24 zur tangentialen Fläche kleiner ist als der Abstand des Bolzens 24 zur senkrechten Fläche.

Die Figur 10 zeigt eine Schnittansicht einer weiteren Ausführungsform einer erfindungsgemässen Befestigungsvorrichtung im teilweise eingebauten Zustand. Das erste Spannelement 1 umfasst am Umfang der Anschlagscheibe 11 einen geschlossen umlaufenden Kragen 110, welcher sich in der Richtung des Schaftes 10 von der Anschlagscheibe 11 weg erstreckt. Am Schaft 10, beabstandet zum Gewinde 12 sind zwei Rastelemente in der Form von zwei geschlossen umlaufenden Wülsten 13 vorgesehen und am Spreizkörper 4 ist im Durchgangskanal 42 ein geschlossen umlaufender Wulst 44 vorgesehen, welcher zwischen den beiden Wülsten 13 des ersten Rastelements 1 lösbar verrastet ist. Die Rasten 13;44 sind derart ausgestaltet, dass die Rastkraft grösser ist als die in der Richtung der Längsachse L resultierende Kraft, welche durch die Anpresskraft der Spreizhülse 3 auf dem Spreizkörper 4 erzeugt wird.

**BEZUGSZEICHENLISTE**

| | | | |
|---|---|---|---|
| 1 | Spannschraube | 40 | erstes Ende |
| 10 | Schaft | 41 | zweites Ende |
| 11 | Anschlag | 42 | Durchgangsbohrung |
| 110 | Kragen | 43 | drittes Ende |
| 12 | Gewinde | 44 | Raste |
| 13 | Raste | 5 | Abdeckscheibe |
| 2 | Mutter | 50 | Ausnehmung |
| 20 | Schaft | 500 | Exzenter |
| 21 | Gewinde | 501 | Ausnehmung |
| 22 | Schlüsselfläche | 6 | Dichtscheibe |
| 23 | Nut | 60 | Ausnehmung |
| 24 | Bolzen | 7 | Käfig |
| 25 | Gleitfläche | 70 | Ausnehmung |
| 200 | Mutter | 71 | Öffnung |
| 201 | Stift | 72 | Anschlag |
| 202 | Nut | 8 | Befestigungsschraube |
| 3 | Spreizhülse | 9 | Toilettenkörper |
| 30 | erstes Ende | 90 | Oberfläche |
| 31 | zweites Ende | 91 | Ausnehmung |
| 32 | erster Schlitz | 910 | Wand |
| 33 | zweiter Schlitz | 911 | Boden |
| 4 | Spreizkörper | 92 | Ausnehmung |
| 920 | Wand | L | Längsachse |
| 93 | Unterfläche | D1-D5 | Durchmesser |

## Patentansprüche

1. Eine Befestigungsvorrichtung für einen Toilettensitz, umfassend
eine Spannvorrichtung (1;2) mit einem ersten Spannelement (1) und mit einem zweiten Spannelement (2), welche entlang einer Längsachse (L) gegeneinander verspannbar sind,
eine Spreizhülse (3), welche sich von einem ersten Ende (30) entlang der Längsachse (L) zu einem zweiten Ende (31) erstreckt,
einen Spreizkörper (4), welcher sich von einem ersten Ende (40) entlang der Längsachse (L) zu einem zweiten Ende (41) erstreckt, wobei die äusseren Abmessungen (D3) des ersten Endes (40) des Spreizkörpers (4) und die inneren Abmessungen (D2) des zweiten Endes (31) der Spreizhülse (3) derart ausgestaltet sind, dass das erste Ende (40) des Spreizkörpers (4) in das zweite Ende (31) der Spreizhülse (3) einführbar ist, wobei zwischen dem ersten Ende (40) des Spreizkörpers (4) und dem zweiten Ende (41) des Spreizkörpers (4) mindestens ein konischer Abschnitt vorgesehen ist, in welchem die äusseren Abmessungen in der Richtung des zweiten Endes (41) des Spreizkörpers (4) zunehmen, wobei die grössten äusseren Abmessungen (D4) des konischen Abschnitts grösser sind als die inneren Abmessungen (D2) des zweiten Endes (31) der Spreizhülse (3),
eine Abdeckscheibe (5;500), welche sich im Wesentlichen senkrecht zur Längsachse (L) erstreckt, wobei die äusseren Abmessungen (D5) der Abdeckscheibe (5;500) grösser sind als die grössten äusseren Abmessungen (D4) des konischen Abschnitts des Spreizkörpers (4),
wobei die Spreizhülse (3), der Spreizkörper (4) und die Abdeckscheibe (5;500) zwischen dem ersten Spannelement (1) und dem zweiten Spannelement (2) angeordnet sind,
wobei die Spreizhülse (3) mit ihrem ersten Ende (30) am ersten Spannelement (1) anschlägt,
wobei der Spreizkörper (4) mit seinem ersten Ende (40) auf der Seite des zweiten Endes (31) der Spreizhülse (3) einführbar an der Spreizhülse (3) angeordnet ist,
wobei die Abdeckscheibe (5;500) mit ihrer einen Seite am zweiten Ende (41) des Spreizkörpers (4) anschlägt und mit ihrer anderen Seite am zweiten Spannelement (2) anschlägt,
wobei ein Einführen des Spreizkörpers (4) in die Spreizhülse (3) aufgrund des konischen Abschnitts des Spreizkörpers (4) zu einer Vergrösserung der Abmessungen des zweiten Endes (31) der Spreizhülse (3) über den grössten äusseren Abmessungen (D4) des konischen Abschnitts hinaus bewirken kann, und
wobei durch ein Verspannen der beiden Spannelemente (1;2), zwischen dem zweiten Ende (31) der Spreizhülse (3) und der Abdeckscheibe (5;500) eine Klemmkraft erzeugbar ist.

2. Die Befestigungsvorrichtung nach Anspruch 1, wobei der Schaft (10) an seinem zweiten Ende ein Aussengewinde (12) umfasst, und wobei das zweite Spannelement (2) an seinem gegen das erste Spannelement (1) gerichteten ersten Ende eine Gewindebohrung (21) umfasst, welche sich entlang der Längsachse (L) erstreckt.

3. Die Befestigungsvorrichtung gemäss Anspruch 1 oder 2, wobei das zweite Spannelement (2) gelenkig am zweiten Ende des Schaftes (10) angeordnet ist, wobei das zweite Spannelement (2) eine Gleitfläche (25) umfasst, welche in Kontakt mit der Abdeckscheibe (5) steht und welche bewirken kann, dass die beiden Spannelemente (1;2) gegeneinander verspannt werden können, wenn das zweite Spannelement (2) von einer im Wesentlichen zur Längsachse (L) senkrechten Ausrichtung in eine mit der Längsachse (L) fluchtenden Richtung gebracht wird.

4. Die Befestigungsvorrichtung gemäss einem der vorangehenden Ansprüche, wobei die Spreizhülse (3) einen Körper mit ersten Schlitzen (32) umfasst, welche sich zumindest von einem Bereich des zweiten Endes (31) der Spreizhülse (3) entlang der Längsachse (L) über zumindest einen Bereich der Länge der Spreizhülse (3) erstrecken.

5. Die Befestigungsvorrichtung gemäss einem der vorangehenden Ansprüche, wobei die Spreizhülse (3) einen Körper mit zweiten Schlitzen (33) umfasst, welche sich zumindest von einem Bereich des ersten Endes (30) der Spreizhülse (3) entlang der Längsachse (L) über zumindest einen Bereich der Länge der Spreizhülse (3) erstrecken.

6. Die Befestigungsvorrichtung gemäss einem der vorangehenden Ansprüche, wobei die äusseren Abmessungen (D1) des ersten Endes (30) der Spreizhülse (3) grösser sind als die äusseren Abmessungen (D2) des zweiten Endes (31) der Spreizhülse (3).

7. Die Befestigungsvorrichtung gemäss einem der Ansprüche 4 bis 6, wobei die Breite der ersten Schlitze (32) der Spreizhülse (3) vom Bereich des zweiten Endes (31) der Spreizhülse (3) in der Richtung des ersten Endes (30) der Spreizhülse (3) abnimmt.

8. Die Befestigungsvorrichtung gemäss einem der Ansprüche 4 bis 7, wobei der Körper der Spreizhülse (3) ein erstes Material umfasst und wobei zumindest ein Bereich der ersten Schlitze (32) und/oder zumindest ein Bereich der zweiten Schlitze (33) mit einem zweiten Material gefüllt sind.

9. Die Befestigungsvorrichtung gemäss einem der Ansprüche 4 bis 8, wobei der Körper des Bereiches des zweiten Endes (31) der Spreizhülse (3) ein Material umfasst, welches unterschiedlich zum Material der restlichen Bereiche des Körpers der Spreizhülse (3) ist.

10. Die Befestigungsvorrichtung gemäss Anspruch 9, wobei das Material des Bereiches des zweiten Endes (31) der Spreizhülse (3) das zweite Material umfasst.

11. Die Befestigungsvorrichtung gemäss einem der vorangehenden Ansprüche, wobei der Spreizkörper (4) mehrere Abschnitte umfasst, wobei jeder der Abschnitte ein dem ersten Ende (40) des Spreizkörpers (4) zugewandtes drittes Ende (43) umfasst, und wobei die äussern Abmessungen des Spreizkörpers (4) vom dritten Ende (43) in der Richtung des zweiten Endes (41) des Spreizkörpers (4) zunehmen, und wobei die äusseren Abmessungen des dritten Endes (43) im Wesentlichen denjenigen des ersten Endes (40) des Spreizkörpers entsprechen.

12. Die Befestigungsvorrichtung gemäss Anspruch 11, wobei die mehreren Abschnitte des Spreizkörpers (4) entlang der Längsachse (L) unterschiedlich lang sind.

13. Die Befestigungsvorrichtung gemäss Anspruch 11, wobei die Abdeckscheibe (5) im Wesentlichen plan oder gewölbt ausgebildet ist.

14. Die Befestigungsvorrichtung gemäss Anspruch 13, wobei die Abdeckscheibe als Exzenter (500) ausgebildet ist, wobei eine Ausnehmung als T-Nut (501) ausgebildet ist, welche sich im Wesentlichen von der zentrisch angeordneten Längsachse (L) senkrecht zu dieser seitlich nach aussen erstreckt, wobei das zweite Spannelement als Mutter (200) ausgebildet ist und wobei der Exzenter (500) einen Stift (201) umfasst, welcher seitlich neben der Ausnehmung (501) angeordnet ist und sich parallel zur Längsachse (L) vom Scheibenkörper weg erstreckt.

15. Die Befestigungsvorrichtung gemäss einem der vorangehenden Ansprüche, wobei das zweite Spannelement (2), der Spreizkörper (4) und die Abdeckscheibe (5) gemeinsam einstückig ausgebildet sind.
